# EUROPÄISCHE PATENTSCHRIFT

(11) **EP 3 309 065 B1**
(45) Veröffentlichungstag und Bekanntmachung des Hinweises auf die Patenterteilung: **26.08.2020**
(21) Anmeldenummer: 16193326.2
(22) Anmeldetag: 11.10.2016
(51) Int. Cl.: B64C 23/00, B64C 23/06

(54) **VERFAHREN ZUR BEEINFLUSSUNG VON QUERSTROMINSTABILITÄTEN AN EINEM STRÖMUNGSKÖRPER SOWIE STRÖMUNGSKÖRPERSYSTEM**
METHOD FOR INFLUENCING CROSS-FLOW INSTABILITIES IN A FLUID FLOW BODY AND FLOW BODY SYSTEM
PROCÉDÉ DESTINÉ À INFLUENCER DES INSTABILITÉS D'ÉCOULEMENT TRANSVERSAL DANS UN CORPS D'ÉCOULEMENT ET SYSTÈME DE CORPS D'ÉCOULEMENT

(43) Veröffentlichungstag der Anmeldung: 18.04.2018
(73) Patentinhaber: Airbus Defence and Space GmbH, 82024 Taufkirchen (DE)
(72) Erfinder: MEYER, Michael, 80337 München (DE); BAUER, Matthias, 12435 Berlin (DE)
(74) Vertreter: Isarpatent

(56) Entgegenhaltungen:
- EP-A2- 0 267 023
- GB-A- 1 110 217
- US-A- 2 764 373
- US-A- 4 932 610
- US-A1- 2012 074 263

## Beschreibung

Die vorliegende Erfindung betrifft ein Verfahren zur Beeinflussung von Querstrominstabilitäten an einem Strömungskörper sowie ein Strömungskörpersystem.

Obwohl in vielfältigen Anwendungen von umströmten Oberflächen bzw. Strömungskörpern verwendbar, werden die vorliegende Erfindung sowie die ihr zugrunde liegende Problematik in Bezug auf umströmte Oberflächen von Luftfahrzeugen näher erläutert.

Um einen Strömungskörper mit geringem Strömungswiderstand zu realisieren, wird häufig versucht, eine den Strömungskörper umströmende Fluidströmung derart zu beeinflussen, dass ein laminar-turbulenter Umschlag der Strömung verhindert oder erst möglichst weit stromabwärts einer angeströmten Vorderkante des Strömungskörpers auftritt. In technischen Anwendungen von Strömungskörpern, wie beispielsweise Flugzeugflügeln, treten in der Regel Querströmungen auf, die quer zu der Strömungsrichtung gerichtet sind, in welcher die Fluidströmung den Strömungskörper anströmt. Querströmungen können insbesondere bei einer Anströmung des Strömungskörpers in einer Strömungsrichtung, welche eine entlang der Vorderkante gerichtete Richtungskomponente aufweist, auftreten. Weiterhin bilden sich Querströmungen infolge von Druckgradienten, welche beispielsweise aus unterschiedlichen sich entlang der Vorderkante ergebenden Querschnittsprofilen des Strömungskörpers resultieren. Die Querströmungen verursachen Querstrominstabilitäten in der Fluidströmung, welche verstärkt werden und letztlich einen laminar-turbulenten Umschlag der Fluidströmung verursachen. In bestimmten Fällen, wie beispielsweise im Flügelspitzenbereich sehr schlanker Flügel, ist eine laminare Grenzschicht hingegen unerwünscht. In diesen Fällen besteht daher ein Bedarf zur Anfachung von den laminar-turbulenten Umschlag befördernden Querstrominstabilitäten.

Üblicherweise wird zur Verbesserung des laminar-turbulenten Umschlagverhaltens versucht, das Anwachsen der Querstrominstabilitäten durch gezieltes Einbringen von Strömungsinstabilitäten in Form eines künstlichen, aktiv erzeugten Wirbelsystems in die Fluidströmung zu verhindern oder zu verringern. Hierzu ist es beispielsweise bekannt, an der Strömungsoberfläche entlang der Querströmungsrichtung zueinander beabstandet angeordnete Mikrozylinder zum gezielten Erzeugen von Instabilitäten zu vorzusehen. Weiterhin ist es zum gezielten Erzeugen von Instabilitäten bekannt, an der Strömungsoberfläche entlang der Querströmungsrichtung zueinander beabstandeten Öffnungen Druckluft auszublasen oder abzusaugen.

Aus der US 2012/0074263 A1 ist es außerdem bekannt, mittels an der Strömungsoberfläche angeordneten Elektroden ein Plasma zum gezielten Einbringen von Instabilitäten in die Fluidströmung zu erzeugen.

US 4 932 610 A beschreibt ein System zur Beeinflussung der Grenzschicht. Einzelne Heizstellen sind in der Oberfläche der Oberseite einer Flugzeug-Tragfläche, entlang der Vorderkante angeordnet. Diese erzeugen eine turbulente Strömung, die der Grenzschicht Energie zuführt.

Es ist Aufgabe der vorliegenden Erfindung jeweils ein Verfahren und ein Strömungskörpersystem bereitzustellen, mit dem das Anwachsen von Querstrominstabilitäten in einer Fluidströmung in verbesserter Weise unterdrückt bzw. verlangsamt wird.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Verfahren zur Beeinflussung von Querstrominstabilitäten an einem Strömungskörper vorgesehen. Der Strömungskörper wird an einer Vorderkante mit einer Fluidströmung angeströmt. Erfindungsgemäß erfolgt ein Erhitzen von diskreten Heizstellen, welche in Bezug auf eine quer zu der Vorderkante gerichtete Tiefenrichtung des Strömungskörpers stromabwärts der Vorderkante an der Strömungsoberfläche des Strömungskörpers und entlang der Vorderkante beabstandet zueinander angeordnet sind. Durch das Erhitzen der Heizstellen werden Konkurrenzinstabilitäten bzw. Konkurrenzwirbel in der Fluidströmung erzeugt, welche das möglicherweise auftretender Querstrominstabilitäten beeinflussen.

Bei dem erfindungsgemäßen Verfahren erfolgt somit ein gezieltes Einbringen von Instabilitäten in die Strömung zur Beeinflussung des Wachstums von Querstrominstabilitäten durch Aufheizen der Strömungsoberfläche in mehreren kleinen voneinander getrennten und beabstandet zueinander angeordneten Oberflächenbereichen. Die Beeinflussung des Wachstums der Querstrominstabilitäten kann dabei zu einer Unterdrückung, also einer Behinderung des Wachstums, oder einer Anfachung von einen laminar-turbulenten Umschlag fördernden Querstrominstabilitäten genutzt werden. Eine über die Strömungsoberfläche des Strömungskörpers strömende Fluidströmung wird an den heißen Heizstellen erwärmt, wodurch eine lokale Dichteänderung und eine Viskositätsänderung der Fluidströmung im Bereich der Heizstellen erzielt wird. Dies führt jeweils zu einer kleinen lokalen Richtungsänderung der Fluidströmung, welche die Bildung von in der Strömungsrichtung anwachsenden Konkurrenzwirbeln bzw. Konkurrenzinstabilitäten bewirkt. Die Bildung und das Wachstum der mit den Querstrominstabilitäten wechselwirkenden Konkurrenzwirbel unterdrückt oder verstärkt in vorteilhafter Weise effizient das Wachstum von Querstrominstabilitäten. Die Erzeugung von Konkurrenzwirbeln mittels Erhitzen von Heizstellen bietet den Vorteil, dass eine effiziente Einbringung von Instabilitäten in die Fluidströmung mit sehr geringem Energieaufwand möglich ist. Weiterhin lassen sich Heizstellen vorteilhaft in die Strömungsoberfläche integrieren. Insbesondere kann eine aerodynamisch günstige, geschlossene Strömungsoberfläche ohne Öffnungen oder Erhöhungen realisiert werden. Dies bietet neben aerodynamischen Vorteilen auch Vorteile hinsichtlich der Wartung und Reinigung des Strömungskörpers. Aufgrund der einfachen Realisierbarkeit von Heizstellen kann durch das erfindungsgemäße Verfahren weiterhin auf den Einsatz aufwendiger pneumatischer Komponenten zum Ausblasen oder Absaugen von Luft an der Strömungsoberfläche verzichtet werden. Zudem können bei der Erzeugung der Konkurrenzinstabilitäten durch Erhitzen der Heizstellen große Amplituden der Konkurrenzinstabilität mit geringem Energieaufwand erzeugt werden. Es wird daher eine äußerst effiziente Unterdrückung oder Verstärkung von Querstrominstabilitäten bewirkt.

Gemäß einer bevorzugten Ausführungsform des Verfahrens erfolgt das Erhitzen der Heizstellen mittels einer thermisch an diese gekoppelten elektrischen Heizeinrichtung. Die Heizstellen werden demnach mittels elektrischer Energie beheizt. Eine elektrische Beheizung der Heizstellen ist konstruktiv auf einfache Weise und mit geringem Gewicht umsetzbar.

Gemäß einer weiteren vorteilhaften Ausführungsform sind die Heizstellen zueinander in einem Abstand in einem Bereich zwischen 1 mm und 10 mm angeordnet. In diesem Abstandsbereich erfolgt vorteilhaft eine sehr gute Dämpfung von Querstrominstabilitäten für einen großen Bereich möglicher Strömungsrandbedingungen. Bevorzugt sind die Heizstellen periodisch entlang der Vorderkante, also mit jeweils gleichem Abstand zueinander, angeordnet. Hierdurch wird eine effiziente Beeinflussung von Querstrominstabilitäten bei einem einfachen Aufbau des Strömungskörpers bewirkt.

Bei dem erfindungsgemäßen Verfahren sind die diskreten Heizstellen als diskrete Oberflächenbereiche der Strömungsoberfläche des Strömungskörpers ausgebildet, wobei die Heizstellen eine Erstreckung entlang der Vorderkante aufweisen, welche zwischen 20 Prozent und 50 Prozent der Beabstandung der Heizstellen zueinander beträgt. In diesem Bereich wird vorteilhaft eine starke Beeinflussungswirkung des Wachstums von Querstrominstabilitäten für einen ausreichend großen Bereich möglicher Strömungsrandbedingungen bei geringem konstruktiven Aufwand erzielt

Gemäß einer weiteren Ausführungsform des Verfahrens sind die diskreten Heizstellen als kreisförmige, ellipsenförmige, rechteckförmige, polygonförmige oder ähnliche diskrete Oberflächenbereiche der Strömungsoberfläche des Strömungskörpers ausgebildet. Kreisförmige Heizstellen bieten insbesondere den Vorteil, dass diese konstruktiv einfach realisierbar sind.

Nach einem weiteren Aspekt der Erfindung ist ein Strömungskörpersystem vorgesehen. Das Strömungskörpersystem weist einen Strömungskörper mit einer eine Vorderkante des Strömungskörpers ausbildenden Strömungsoberfläche und eine thermisch leitend an Heizstellen der Strömungsoberfläche gekoppelte Heizeinrichtung zum Erhitzen der Heizstellen auf. Die Heizstellen sind in Bezug auf eine sich quer zu der Vorderkante erstreckende Tiefenrichtung und entlang der Vorderkante beabstandet zueinander angeordnet.

Das Strömungskörpersystem weist somit einen Strömungskörper mit einer zur Anströmung mit einer Fluidströmung vorgesehenen Vorderkante auf. Weiterhin sind an einer Strömungsoberfläche des Strömungskörpers beheizbare Oberflächenbereiche als Heizstellen vorgesehen. Diese sind mittels einer Heizeinrichtung beheizbar und gegenüber der Vorderkante in Bezug auf eine vorgesehene Anströmrichtung stromabwärts der Vorderkante angeordnet. Insbesondere sind die Heizstellen zueinander entlang einer durch die Vorderkante definierten Längsrichtung beabstandet, sodass die Heizstellen eine entlang der Vorderkante verlaufende Reihe bilden. Die Heizstellen sind somit in einer sich quer zu einer vorgesehenen Anströmungsrichtung des Strömungskörpers erstreckenden Querströmungsrichtung zueinander beabstandet.

Die thermisch an die Heizeinrichtung gekoppelten Heizstellen können mittels der Heizeinrichtung erhitzt werden, wodurch sich auf einfache und effiziente Weise gezielt Konkurrenzinstabilitäten in eine den Strömungskörper umströmende Fluidströmung einbringen lassen. Insbesondere ist zur Erzeugung der Konkurrenzinstabilitäten lediglich eine thermisch an die Strömungsoberfläche gekoppelte Heizeinrichtung notwendig. Dadurch ergibt sich ein besonders einfacher konstruktiver Aufbau des Strömungskörpersystem mit geringem Gewicht, da insbesondere auf pneumatische Komponenten und bewegte Teile verzichtet werden kann. Da weiterhin keine äußeren Einflüssen ausgesetzte Öffnungen oder Erhöhungen an der Strömungsoberfläche vorgesehen werden müssen, weist das erfindungsgemäße Strömungskörpersystem eine verbesserte Betriebszuverlässigkeit auf. Weiterhin ist die zur Erzeugung der Konkurrenzwirbel benötigte Energie sehr gering.

Unter der thermische Kopplung zwischen den Heizstellen und der Heizeinrichtung wird hierin allgemein eine Wärmeübertragung von der Heizeinrichtung an die Strömungsoberfläche des Strömungskörpers verstanden.

Gemäß einer vorteilhaften Weiterbildung des Strömungskörpersystems weist die Heizeinrichtung eine der Anzahl der Heizstellen entsprechende Anzahl von Heizelementen auf. Hierbei ist jeder Heizstelle jeweils ein Heizelement zugeordnet. Dadurch wird die Ausfallsicherheit des Strömungskörpersystems erhöht.

Die Heizelemente können insbesondere jeweils auf der Seite einer entgegengesetzt zu der Strömungsoberfläche orientierten Innenoberfläche des Strömungskörpers angeordnet sein. Demnach sind die Heizelemente im Inneren des Strömungskörpers untergebracht. Auf diese Weise werden aerodynamisch nachteilige Unebenheiten an der Strömungsoberfläche vermieden.

Besonders bevorzugt sind die Heizelemente durch elektrische Heizwiderstände ausgebildet. Elektrische Heizwiderstände, z.B. in Form von Heizwendeln, sind äußerst kostengünstig und können auf einfache Weise an dem Strömungskörper montiert werden. Weiterhin bieten diese Elemente den Vorteil, dass diese einen hohen Heizwirkungsgrad aufweisen. Damit lässt sich ein konstruktiv einfacher Aufbau des Strömungskörpersystems mit sehr geringem Gewicht realisieren.

Gemäß einer weiteren vorteilhaften Ausführungsform weist das Strömungskörpersystem zusätzlich eine funktional an die Heizelemente gekoppelte Steuerungseinrichtung auf, mittels derer die Heizelemente einzeln betätigbar sind. Die Steuerungseinrichtung ist demnach dazu ausgelegt, jedes der Heizelemente unabhängig von den übrigen Heizelementen in einen Heizzustand zu versetzen. Dadurch kann der Abstand zwischen benachbart gelegenen sich in einem Heizzustand befindlichen Heizstellen verändert und somit die Einbringung von Konkurrenzwirbeln in eine Fluidströmung flexibel an die Strömungsbedingungen angepasst werden. Beispielsweise ermöglicht diese Ansteuerbarkeit der Heizelemente sowohl die Dämpfung als auch die Verstärkung von Querstrominstabilitäten. Damit wird eine große Flexibilität bei der Strömungskontrolle erreicht.

Zur thermischen Kopplung der Heizeinrichtung an die Heizstellen kann insbesondere vorgesehen sein, dass die Heizelemente an die entgegengesetzt zu der Strömungsoberfläche orientierte Innenoberfläche des Strömungskörpers wärmeleitend kontaktiert sind. Hierbei kann eine direkte Kontaktierung zwischen den Heizelementen und dem Strömungskörper oder indirekt durch ein Wärmeleitungsteil vorgesehen sein. Durch die Kontaktierung an die Innenfläche können Ausnehmungen in dem Strömungskörper vermieden werden, wodurch die mechanische Festigkeit des Strömungskörpers erhalten bleibt und die Konkurrenzwirbel an einer aerodynamisch einwandfreien Oberfläche ohne Öffnungen oder dergleichen erzeugbar sind.

Alternativ hierzu kann vorgesehen sein, dass die Heizelemente in in dem Strömungskörper ausgebildeten Ausnehmungen angeordnet sind und bündig mit der Strömungsoberfläche abschließen. Hierbei kann eine Heizeinheit des Heizelements selbst oder ein mit diesem wärmeleitend verbundenes Wärmeleitungsteil in der Ausnehmung angeordnet sein. Das Heizelement bildet hierbei den der Heizstelle entsprechenden Teil der Strömungsoberfläche des Strömungskörpers. Diese Konfiguration des Strömungskörpersystems bietet den Vorteil, dass eine hohe Heizleistungsdichte an der Strömungsoberfläche bei großer mechanischer Stabilität des Strömungskörpers erzielbar ist.

Gemäß dem erfindungsgemäßen Strömungskörpersystems ist vorgesehen, dass die Heizstellen als diskrete Oberflächenbereiche der Strömungsoberfläche des Strömungskörpers ausgebildet sind, wobei die Heizstellen eine Erstreckung entlang der Vorderkante aufweisen, welche zwischen 20 Prozent und 50 Prozent der Beabstandung der Heizstellen : zueinander beträgt. In diesem Bereich wird vorteilhaft eine starke Beeinflussungswirkung des Wachstums von Querstrominstabilitäten für einen ausreichend großen Bereich möglicher Strömungsrandbedingungen bei geringem konstruktiven Aufwand erzielt.

Nach einer bevorzugten Weiterbildung des Strömungskörpersystems sind die Heizstellen zueinander in einem Abstand in einem Bereich zwischen 1 mm und 10 mm angeordnet. In diesem Abstandsbereich erfolgt vorteilhaft eine sehr gute Dämpfung von Querstrominstabilitäten für einen großen Bereich möglicher Strömungsrandbedingungen. Bevorzugt sind die Heizstellen periodisch entlang der Vorderkante, also mit jeweils gleichem Abstand zueinander, angeordnet. Hierdurch wird eine effiziente Beeinflussung von Querstrominstabilitäten bei einem einfachen Aufbau des Strömungskörpers bewirkt.

Weiterhin kann vorgesehen sein, dass die diskreten Heizstellen als kreisförmige, ellipsenförmige, rechteckförmige, polygonförmige oder ähnliche diskrete Oberflächenbereiche der Strömungsoberfläche des Strömungskörpers ausgebildet sind. Kreisförmige Heizstellen bieten insbesondere den Vorteil, dass diese konstruktiv einfach realisierbar sind. Beispielsweise kann eine Bohrung in dem Strömungskörper ausgebildet werden, in welchen eine stabförmiger Abschnitt eines Heizelements der Heizeinrichtung eingeführt wird.

Das erfindungsgemäße Strömungskörpersystem eignet sich insbesondere zur Durchführung des oben beschriebenen Verfahrens. Im Zusammenhang mit dem Verfahren offenbarte Merkmale und Vorteile gelten somit in analoger Weise auch für das Strömungskörpersystem und umgekehrt.

Nach einem weiteren Aspekt der Erfindung ist ein Flügel für ein Luftfahrzeug mit einem Strömungskörpersystem nach einem der voranstehend beschriebenen Ausführungsformen vorgesehen. Der Strömungskörper des Strömungskörpersystems bildet dabei bevorzugt eine Flügelkomponente der Gruppe bestehend aus Vorderkantenklappe, Hinterkantenklappe, Flügelhauptkörper, Höhenflosse, Höhenruder, Seitenflosse und Seitenruder.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

In Bezug auf eine Beabstandung oder einen Abstand der Heizstellen zueinander wird hierin die Länge einer kürzest möglichen Verbindungslinie zwischen zwei unmittelbar benachbarten Heizstellen verstanden.

Im Folgenden wird die Erfindung unter Bezugnahme auf die Figuren der Zeichnungen erläutert. Von den Figuren zeigen:
- Fig. 1: eine perspektivische Ansicht eines Strömungskörpers eines Strömungskörpersystems gemäß einem bevorzugten Ausführungsbeispiel der vorliegenden Erfindung;
- Fig. 2: eine Draufsicht auf einen Strömungskörper eines Strömungskörpersystems gemäß einem weiteren Ausführungsbeispiel der vorliegenden Erfindung;
- Fig. 3: eine abgebrochene Schnittansicht eines Ausführungsbeispiels eines Strömungskörpersystems, die sich bei einem Schnitt entlang der in Fig. 2 eingezeichneten Linie A-A ergibt;
- Fig. 4: eine abgebrochene Schnittansicht eines weiteren Ausführungsbeispiel eines Strömungskörpersystems, die sich bei einem Schnitt entlang der in Fig. 2 eingezeichneten Linie A-A ergibt;
- Fig. 5: eine schematische Ansicht eines Luftfahrzeugs mit einem Strömungskörpersystem.

In den Figuren bezeichnen dieselben Bezugszeichen gleiche oder funktionsgleiche Komponenten, soweit nichts Gegenteiliges angegeben ist.

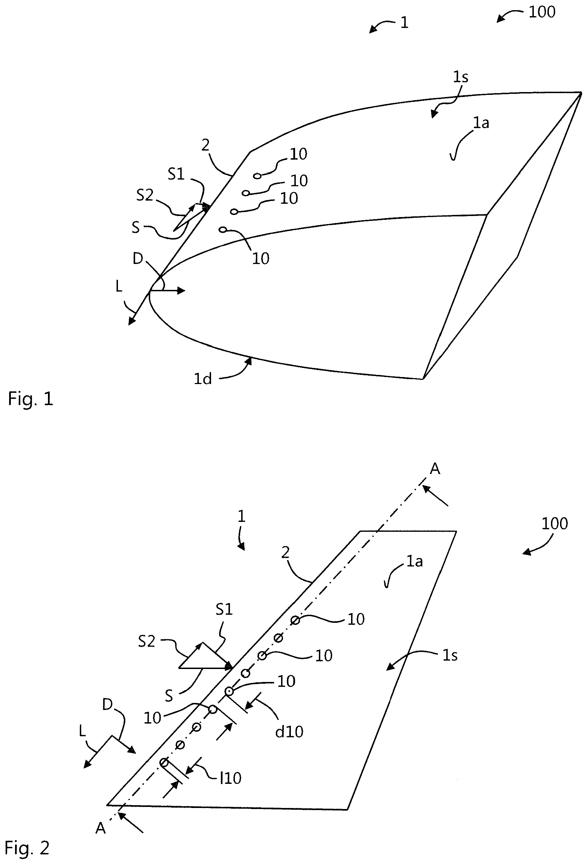

Die Fig. 1 und 2 zeigen jeweils schematisch und beispielhaft einen Strömungskörper 1 eines Strömungskörpersystems 100. Der Strömungskörper 1 weist eine eine Außenkontur des Strömungskörpers 1 definierende Strömungsoberfläche 1a auf. Wie in den Fig. 1 und 2 gezeigt ist, bildet die Strömungsoberfläche 1a eine zur Anströmung vorgesehene Vorderkante 2 des Strömungskörpers 1 aus. Wie in Fig. 1 beispielhaft gezeigt ist, kann insbesondere vorgesehen sein, dass die Vorderkante 2 die Strömungsoberfläche 1a in eine Druckseite 1d und eine Saugseite 1s teilt. Wie in Fig. 2 beispielhaft zeigt, ist der Strömungskörper 1 als ein länglicher Körper ausgebildet, wobei sich die Vorderkante 2 des Strömungskörpers 1 in einer Längsrichtung L des Strömungskörpers 1 erstreckt.

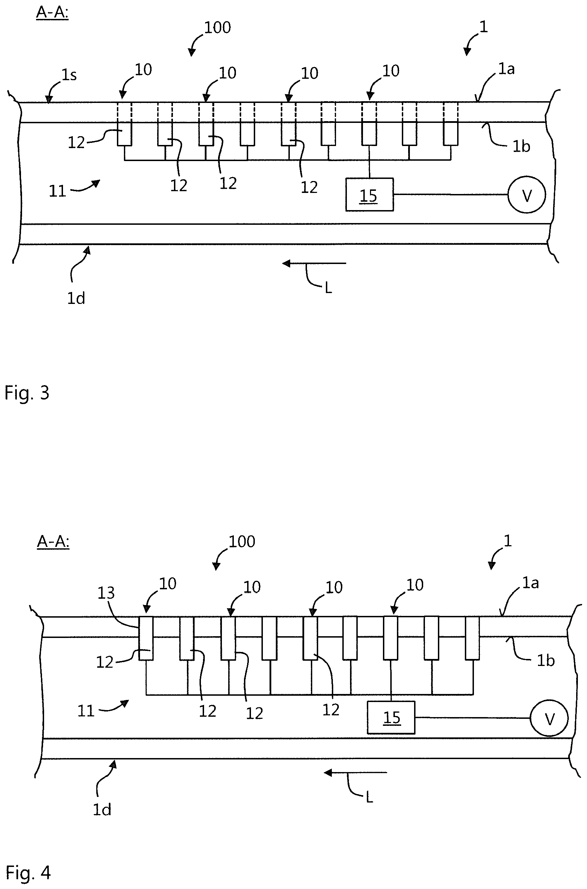

Wie in den Fig. 1 und 2 weiterhin gezeigt ist, sind an der Strömungsoberfläche 1a des Strömungskörpers 1 Heizstellen 10 vorgesehen. Die Heizstellen 10 sind mittels einer Heizeinrichtung 11 erhitzbar, welche thermisch leitend an die Heizstellen 10 der Strömungsoberfläche 1a gekoppelt ist und im Folgenden anhand der Fig. 3 und 4 noch genauer beschrieben wird. Bei einer Anströmung der Vorderkante 2 mit einer Fluidströmung erfolgt ein Erhitzen der Heizstellen 10 mittels der Heizeinrichtung 11. Die über die Strömungsoberfläche 1a strömende Fluidströmung wird an den heißen Heizstellen 10 erwärmt, wodurch eine lokale Dichteänderung und eine Viskositätsänderung der Fluidströmung im Bereich der Heizstellen 10 erzielt wird. Dadurch werden an jeder Heizstelle 10, die sich in einem beheizten Zustand befindet, in der Strömungsrichtung S der Fluidströmung anwachsende Konkurrenzwirbel bzw. Konkurrenzinstabilitäten erzeugt. Die Bildung und das Wachstum der Konkurrenzwirbel unterdrückt oder fördert das Wachstum von unerwünschten Querstrominstabilitäten.

Wie in den Fig. 1 und 2 gezeigt ist, sind mehrere Heizstellen 10 entlang der Vorderkante 2 des Strömungskörpers 1 vorgesehen. Wie insbesondere in Fig. 2 gezeigt ist, sind die Heizstellen 10 in Bezug auf eine sich quer zu der Vorderkante 2 erstreckende Tiefenrichtung D zu der Vorderkante 2 beabstandet angeordnet. Weiterhin sind die die Heizstellen 10 zueinander in Bezug auf die Längsrichtung L in einem Abstand d10 zueinander angeordnet. Der Abstand d10 liegt bevorzugt in einem Bereich zwischen 1 mm und 10 mm und kann insbesondere zwischen zwei in Bezug auf die Längsrichtung L benachbart gelegenen Heizstellen 10 für alle Heizstellen 10 gleich groß sein, wie in Fig. 2 beispielhaft gezeigt ist. Die Fig. 1 und 2 zeigen jeweils eine sich entlang der Längsrichtung L erstreckende Reihe von Heizstellen 10. Zusätzlich hierzu können in der Tiefenrichtung D eine oder mehrere weitere Reihen von Heizstellen 10 vorgesehen sein. In den Fig. 1 und 2 sind beispielhaft jeweils an der Saugseite 1s des Strömungskörpers 1 vorgesehene Heizstellen 10 gezeigt. Selbstverständlich können alternativ oder zusätzlich hierzu die Heizstellen 10 auch an der Druckseite 1d des Strömungskörpers 1 vorgesehen sein. Die diskreten Heizstellen 10 sind vorzugsweise als kreisförmige diskrete Oberflächenbereiche der Strömungsoberfläche 1a des Strömungskörpers 1 ausgebildet, wie dies beispielhaft in den Fig. 1 und 2 dargestellt ist. Die Heizstellen 10 weisen eine Erstreckung 10 entlang der Vorderkante 2 auf, welche zwischen 20 Prozent und 50 Prozent der Beabstandung der Heizstellen 10 zueinander beträgt. Die Erstreckung I10 bzw. die Längserstreckung der Heizstellen beträgt also zwischen 20 Prozent und 50 Prozent des Abstands d10. In dem in den Fig. 1 und 2 beispielhaft als kreisförmig dargestellten Heizstellen 10 entspricht die Erstreckung I10 dem Kreisdurchmesser.

Wie in den Fig. 3 und 4 gezeigt ist, weist das Strömungskörpersystem 100 weiterhin eine thermisch leitend an die Heizstellen 10 gekoppelte Heizeinrichtung 11 zum Erhitzen der Heizstellen 10 auf. Wie in den Fig. 3 und 4 gezeigt ist, ist der Strömungskörper 1 vorzugsweise als Hohlkörper mit einer entgegengesetzt zu der Strömungsoberfläche 1a orientierten Innenoberfläche 1b ausgebildet. Die Heizeinrichtung 11 kann dabei insbesondere auf der Seite der Innenoberfläche 1b bzw. im Inneren des Strömungskörpers 1 angeordnet sein, wie in den Fig. 3 und 4 beispielhaft gezeigt ist. Wie in den Fig. 3 und 4 weiterhin gezeigt ist, weist die Heizeinrichtung 11 bevorzugt eine der Anzahl der Heizstellen 10 entsprechende Anzahl von Heizelementen 12 auf. Durch die in den Fig. 3 und 4 gezeigten Anordnungen der Heizeinrichtung 11, kann eine aerodynamisch günstige, geschlossene Strömungsoberfläche 1a ohne Öffnungen oder Erhöhungen realisiert werden. Durch diese einfache Realisierung von beheizbaren Heizstellen 10 an der Strömungsoberfläche 1a kann der Einsatz aufwendiger pneumatischer Komponenten zum Ausblasen oder Absaugen von Luft an der Strömungsoberfläche verzichtet werden. Zudem können bei der Erzeugung der Konkurrenzinstabilität durch Erhitzen der Heizstellen große Amplituden der Konkurrenzinstabilität erzeugt werden.

Die Heizelemente 12 sind in den Fig. 3 und 4 jeweils schematisch dargestellt und können insbesondere durch elektrische Heizwiderstände ausgebildet sein, welche an eine elektrische Spannungsquelle V anschließbar sind.

Fig. 3 zeigt eine Möglichkeit der thermischen Kopplung der Heizelemente 12 an die Heizstellen 10 durch Kontaktierung der Heizelemente 12 an die Innenoberfläche 1b des Strömungskörpers 1. Fig. 3 zeigt beispielhaft eine Realisierung der thermischen Kopplung durch direkte Kontaktierung der Heizelemente 12 an die Innenoberfläche 1b des Strömungskörpers 1. Alternativ hierzu kann auch vorgesehen sein, dass die wärmeerzeugenden Heizeinheiten (nicht gezeigt) der Heizelemente 12 mittels Wärmeleitungsteilen (nicht gezeigt) beispielsweise Metallplättchen oder dergleichen (nicht gezeigt) wärmeleitend mit der Innenoberfläche 1b kontaktiert sind. In Fig. 3 sind die Heizstellen 10 als gestrichelte Linien schematisch angedeutet.

Fig. 4 zeigt eine weitere bevorzugte Möglichkeit der thermischen Kopplung der Heizelemente 12 an die Heizstellen 10. Hierbei sind die Heizelemente 12 in sich zwischen der Strömungsoberfläche 1a und der Innenoberfläche 1b erstreckenden Ausnehmungen 13 angeordnet bzw. in diese eingesteckt. Wie in Fig. 4 gezeigt ist, schließen die Heizelemente 12 hierbei bündig mit der Strömungsoberfläche 1a ab, sodass die Stirnflächen der Heizelemente 12 jeweils die Heizstelle 10 und damit einen Teil der Strömungsoberfläche 1a bilden.

Die Fig. 3 und 4 zeigen weiterhin eine optionale Steuerungseinrichtung 15 des Strömungskörpersystems 100. Die Steuerungseinrichtung 15 ist funktional an die Heizelemente 12 gekoppelt und zur individuellen Betätigung einzelner Heizelemente 12 vorgesehen. Insbesondere ist die Steuerungseinrichtung 15 dazu ausgelegt, eine von der Spannungsquelle V erzeugte elektrische Spannung auf die einzelnen Heizelementen 12 durchzuschalten und diese damit in einen Heizzustand zu schalten. Somit können mittels der optionalen Steuerungseinrichtung 15 einzelne Heizelemente 12 oder Gruppen von Heizelementen 12 jeweils in einen Heizzustand versetzt und damit der Abstand zwischen zwei beheizten Heizstellen 10 eingestellt werden. Je nach dem welcher Abstand zwischen den beheizten Heizstellen 10 eingestellt ist, werden verschiedene Moden der zu unterdrückenden Querstrominstabilitäten gedämpft oder verstärkt. Damit kann durch Steuerung des Heizzustands der Heizstellen 10 eine flexible Strömungskontrolle realisiert werden.

In den Fig. 1 und 2 ist beispielhaft und schematisch eine Anströmung des Strömungskörpers 1 mit einer Fluidströmung dargestellt, welche in einer Hauptströmungsrichtung S auf die Vorderkante 2 des Strömungskörpers 1 trifft, wobei die Fluidströmung eine erste Richtungskomponente S1 quer zu der Vorderkante 2 und eine zweite Richtungskomponente S2 entlang der Vorderkante 2 aufweist. Bei einer derartigen Anströmung des Strömungskörpers 1 bilden sich üblicherweise in besonders großem Maße Querstrominstabilitäten aus. Durch das Erhitzen der Heizstellen 10 werden Konkurrenzwirbel in der Fluidströmung erzeugt welche die Querstrominstabilitäten insbesondere unterdrücken.

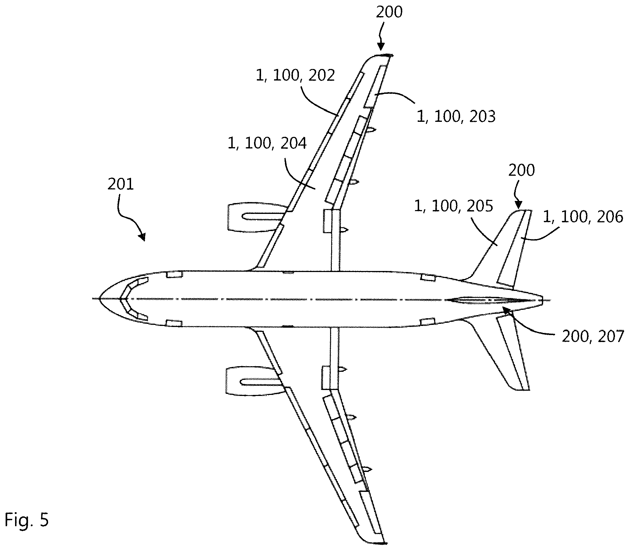

Fig. 5 zeigt eine vorteilhafte Verwendung des oben beschriebenen Strömungskörpersystems 100 in einem Flügel 200 eines Luftfahrzeugs 201. Der Strömungskörper 1 kann hierbei insbesondere eine Vorderkantenklappe 202, eine Hinterkantenklappe 203, einen Flügelhauptkörper 204, eine Höhenflosse 205, ein Höhenruder 206, eine Seitenflosse 207 oder ein Seitenruder (nicht gezeigt) bilden.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Strömungskörper
- 1a: Strömungsoberfläche
- 1b: Innenoberfläche des Strömungskörpers
- 1s: Saugseite des Strömungskörpers
- 1d: Druckseite des Strömungskörpers
- 2: Vorderkante des Strömungskörpers
- 10: Heizstellen
- 11: Heizeinrichtung
- 12: Heizelemente
- 13: Ausnehmung
- 15: Steuerungseinrichtung
- 100: Strömungskörpersystem
- 200: Flügel
- 201: Luftfahrzeug
- 202: Vorderkantenklappe
- 203: Hinterkantenklappe
- 204: Flügelhauptkörper
- 205: Höhenflosse
- 206: Höhenruder
- 207: Seitenflosse
- d10: Abstand der Heizstellen zueinander
- D: Tiefenrichtung des Strömungskörpers
- L: Längsrichtung
- I10: Längserstreckung der Heizstellen
- S: Hauptströmungsrichtung der Fluidströmung
- S1: erste Richtungskomponente der Fluidströmung
- S2: zweite Richtungskomponente der Fluidströmung
- V: elektrische Spannungsquelle

## Patentansprüche

1. Verfahren zur Beeinflussung von Querstrominstabilitäten an einem Strömungskörper (1), welcher an einer Vorderkante (2) mit einer Fluidströmung angeströmt wird, mit folgendem Verfahrensschritt:
Erhitzen von diskreten Heizstellen (10), welche in Bezug auf eine quer zu der Vorderkante (2) gerichtete Tiefenrichtung (D) des Strömungskörpers (1) stromabwärts der Vorderkante (2) an der Strömungsoberfläche (la) des Strömungskörpers (1) und entlang der Vorderkante (2) beabstandet zueinander zum Erzeugen von das Wachstum von Querstrominstabilitäten beeinflussenden Konkurrenzinstabilitäten in die Fluidströmung angeordnet sind, wobei die diskreten Heizstellen (10) als diskrete Oberflächenbereiche der Strömungsoberfläche (la) des Strömungskörpers (1) ausgebildet sind, und wobei die Heizstellen (10) eine Erstreckung (I10) entlang der Vorderkante (2) aufweisen, welche zwischen 20 Prozent und 50 Prozent der Beabstandung der Heizstellen (10) zueinander beträgt.

2. Verfahren nach Anspruch 1, wobei das Erhitzen der Heizstellen (10) mittels einer thermisch an diese gekoppelten elektrischen Heizeinrichtung (11) erfolgt.

3. Verfahren nach Anspruch 1 oder 2, wobei ein vorbestimmter Abstand (d10) zwischen jeweils zwei entlang der Vorderkante (2) benachbart gelegenen Heizstellen (10) in einem Bereich zwischen 1 mm und 10 mm liegt.

4. Verfahren nach einem der voranstehenden Ansprüche, wobei die diskreten Heizstellen (10) als kreisförmige, ellipsenförmige, rechteckförmige, polygonförmige oder ähnliche diskrete Oberflächenbereiche der Strömungsoberfläche (la) des Strömungskörpers (1) ausgebildet sind.

5. Strömungskörpersystem (100), aufweisend:
einen Strömungskörper (1) mit einer eine Vorderkante (2) des Strömungskörpers (1) ausbildenden Strömungsoberfläche (la); und
eine thermisch leitend an Heizstellen (10) der Strömungsoberfläche (la) gekoppelte Heizeinrichtung (11) zum Erhitzen der Heizstellen (10), wobei die Heizstellen (10) in Bezug auf eine sich quer zu der Vorderkante (2) erstreckende Tiefenrichtung (D) und entlang der Vorderkante (2) beabstandet zueinander angeordnet sind;
wobei die Heizstellen (10) als diskrete Oberflächenbereiche der Strömungsoberfläche (1a) des Strömungskörpers (1) ausgebildet sind, und wobei die Heizstellen (10) eine Erstreckung (I10) entlang der Vorderkante (2) aufweisen, welche zwischen 20 Prozent und 50 Prozent der Beabstandung der Heizstellen (10) zueinander beträgt.

6. Strömungskörpersystem (100) nach Anspruch 5, wobei die Heizeinrichtung (11) eine der Anzahl der Heizstellen (10) entsprechende Anzahl von Heizelementen (12) aufweist.

7. Strömungskörpersystem (100) nach Anspruch 6, wobei die Heizelemente (12) durch elektrische Heizwiderstände ausgebildet sind.

8. Strömungskörpersystem (100) nach Anspruch 6 oder 7, zusätzlich aufweisend:
eine funktional an die Heizelemente (12) gekoppelte Steuerungseinrichtung (15), mittels derer die Heizelemente (12) einzeln betätigbar sind.

9. Strömungskörpersystem (100) nach einem der Ansprüche 6 bis 8, wobei die Heizelemente (12) an eine entgegengesetzt zu der Strömungsoberfläche (1a) orientierte Innenoberfläche (1b) des Strömungskörpers (1) wärmeleitend kontaktiert sind.

10. Strömungskörpersystem (100) nach einem der Ansprüche 6 bis 8, wobei die Heizelemente (12) in in dem Strömungskörper (1) ausgebildeten Ausnehmungen (13) angeordnet sind und bündig mit der Strömungsoberfläche (1a) abschließen.

11. Strömungskörpersystem (100) nach einem der Ansprüche 5 bis 10, wobei ein Abstand (d10) zwischen zwei entlang der Vorderkante (2) benachbart gelegenen Heizstellen (10) zueinander in einem Bereich zwischen 1 mm und 10 mm liegt.

12. Strömungskörpersystem (100) nach einem der Ansprüche 5 bis 11, wobei die diskreten Heizstellen (10) als kreisförmige, ellipsenförmige, rechteckförmige, polygonförmige diskrete Oberflächenbereiche der Strömungsoberfläche (1a) des Strömungskörpers (1) ausgebildet sind.

13. Flügel (200) für ein Luft- oder Raumfahrzeug (201) mit einem Strömungskörpersystem (100) nach einem der Ansprüche 5 bis 12.

## Claims

1. Method for influencing cross-flow instabilities on a flow body (1), which is subjected to a fluid flow at a leading edge (2), with the following method step:
heating discrete heating points (10), which are arranged downstream of the leading edge (2), with respect to a depth direction (D) of the flow body (1) directed transversely to the leading edge (2), on the flow surface (1a) of the flow body (1) and at a distance from one another along the leading edge (2) for producing competitive instabilities in the fluid flow that influence the growth of cross-flow instabilities, the discrete heating points (10) being formed as discrete surface regions of the flow surface (1a) of the flow body (1), and the heating points (10) having an extent (110) along the leading edge (2) that is between 20 percent and 50 percent of the distance from one another of the heating points (10).

2. Method according to Claim 1, the heating of the heating points (10) being performed by means of an electrical heating device (11) thermally coupled to them.

3. Method according to Claim 1 or 2, wherein a predetermined distance (d10) between every two heating points (10) situated adjacently along the leading edge (2) lying in a range between 1 mm and 10 mm.

4. Method according to one of the preceding claims, the discrete heating points (10) being formed as circular, elliptical, rectangular, polygonal or similar discrete surface regions of the flow surface (1a) of the flow body (1).

5. Flow body system (100), having:
a flow body (1) with a flow surface (1a) forming a leading edge (2) of the flow body (1); and
a heating device (11), coupled in a thermally conducting manner to heating points (10) of the flow surface (1a), for heating the heating points (10), the heating points (10) being arranged at a distance from one another with respect to a depth direction (D) extending transversely to the leading edge (2) and along the leading edge (2);
the heating points (10) being formed as discrete surface regions of the flow surface (1a) of the flow body (1), and the heating points (10) having an extent (110) along the leading edge (2) that is between 20 percent and 50 percent of the distance from one another of the heating points (10).

6. Flow body system (100) according to Claim 5, the heating device (11) having a number of heating elements (12) corresponding to the number of heating points (10).

7. Flow body system (100) according to Claim 6, the heating elements (12) being formed by electrical heating resistors.

8. Flow body system (100) according to Claim 6 or 7, additionally having:
a control device (15), which is functionally coupled to the heating elements (12) and by means of which the heating elements (12) can be individually actuated.

9. Flow body system (100) according to one of Claims 6 to 8, the heating elements (12) being contacted in a thermally conducting manner on an inner surface (1b) of the flow body (1) that is oriented oppositely to the flow surface (1a).

10. Flow body system (100) according to one of Claims 6 to 8, the heating elements (12) being arranged in recesses (13) formed in the flow body (1) and finishing flush with the flow surface (1a).

11. Flow body system (100) according to one of Claims 5 to 10, a distance (d10) between every two heating points (10) situated adjacently along the leading edge (2) lying in a range between 1 mm and 10 mm.

12. Flow body system (100) according to one of Claims 5 to 11, the discrete heating points (10) being formed as circular, elliptical, rectangular, polygonal discrete surface regions of the flow surface (1a) of the flow body (1).

13. Wing (200) for an aircraft or spacecraft (201) with a flow body system (100) according to one of Claims 5 to 12.

## Revendications

1. Procédé destiné à influencer des instabilités d'écoulement transversal sur un corps d'écoulement (1), sur lequel un écoulement de fluide s'écoule sur un bord avant (2), comprenant l'étape de procédé suivante :
le chauffage d'emplacements de chauffage discrets (10), qui sont agencés, par rapport à une direction de profondeur (D) du corps d'écoulement (1) orientée perpendiculairement au bord avant (2), en aval du bord avant (2) sur la surface d'écoulement (1a) du corps d'écoulement (1) et espacés les uns des autres le long du bord avant (2), pour la génération d'instabilités concurrentielles influençant le développement d'instabilités d'écoulement transversal dans l'écoulement de fluide, les emplacements de chauffage discrets (10) étant configurés sous la forme de zones de surface discrètes de la surface d'écoulement (la) du corps d'écoulement (1), et les emplacements de chauffage (10) présentant une extension (110) le long du bord avant (2), qui est comprise entre 20 pour cent et 50 pour cent de l'espacement des emplacements de chauffage (10) les uns des autres.

2. Procédé selon la revendication 1, dans lequel le chauffage des emplacements de chauffage (10) a lieu au moyen d'un dispositif de chauffage électrique (11) couplé thermiquement à ceux-ci.

3. Procédé selon la revendication 1 ou 2, dans lequel un espace prédéterminé (d10) entre deux emplacements de chauffage respectifs (10) voisins le long du bord avant (2) se situe dans une plage comprise entre 1 mm et 10 mm.

4. Procédé selon l'une quelconque des revendications précédentes, dans lequel les emplacements de chauffage discrets (10) sont configurés sous la forme de zones de surface discrètes circulaires, elliptiques, rectangulaires, polygonales ou semblables de la surface d'écoulement (1a) du corps d'écoulement (1).

5. Système à corps d'écoulement (100), comprenant :
un corps d'écoulement (1) comprenant une surface d'écoulement (1a) formant un bord avant (2) du corps d'écoulement (1) ; et
un dispositif de chauffage (11) couplé de manière thermiquement conductrice aux emplacements de chauffage (10) de la surface d'écoulement (1a), pour le chauffage des emplacements de chauffage (10), les emplacements de chauffage (10) étant agencés espacés les uns des autres par rapport à une direction de profondeur (D) s'étendant perpendiculairement au bord avant (2) et le long du bord avant (2) ;
les emplacements de chauffage (10) étant configurés sous la forme de zones de surface discrètes de la surface d'écoulement (1a) du corps d'écoulement (1), et les emplacements de chauffage (10) présentant une extension (110) le long du bord avant (2) qui est comprise entre 20 pour cent et 50 pour cent de l'espacement des emplacements de chauffage (10) les uns des autres.

6. Système à corps d'écoulement (100) selon la revendication 5, dans lequel le dispositif de chauffage (11) comprend un nombre d'éléments de chauffage (12) correspondant au nombre d'emplacements de chauffage (10).

7. Système à corps d'écoulement (100) selon la revendication 6, dans lequel les éléments de chauffage (12) sont formés par des résistances de chauffage électriques.

8. Système à corps d'écoulement (100) selon la revendication 6 ou 7, comprenant en outre :
un dispositif de commande (15) couplé fonctionnellement aux éléments de chauffage (12), au moyen duquel les éléments de chauffage (12) peuvent être actionnés individuellement.

9. Système à corps d'écoulement (100) selon l'une quelconque des revendications 6 à 8, dans lequel les éléments de chauffage (12) sont contactés d'une manière conduisant la chaleur sur une surface intérieure (1b), orientée à l'opposé de la surface d'écoulement (1a), du corps d'écoulement (1).

10. Système à corps d'écoulement (100) selon l'une quelconque des revendications 6 à 8, dans lequel les éléments de chauffage (12) sont agencés dans des évidements (13) formés dans le corps d'écoulement (1) et finissent au même niveau que la surface d'écoulement (la) .

11. Système à corps d'écoulement (100) selon l'une quelconque des revendications 5 à 10, dans lequel un espace (d10) entre deux emplacements de chauffage respectifs (10) voisins le long du bord avant (2) se situe dans une plage comprise entre 1 mm et 10 mm.

12. Système à corps d'écoulement (100) selon l'une quelconque des revendications 5 à 11, dans lequel les emplacements de chauffage discrets (10) sont configurés sous la forme de zones de surface discrètes circulaires, elliptiques, rectangulaires, polygonales de la surface d'écoulement (1a) du corps d'écoulement (1) .

13. Aile (200) pour un véhicule aérien ou spatial (201) comprenant un système à corps d'écoulement (100) selon l'une quelconque des revendications 5 à 12.
